# EUROPÄISCHE PATENTANMELDUNG

(11) **EP 4 764 122 A1**
(43) Veröffentlichungstag der Anmeldung: **24.06.2026**
(21) Anmeldenummer: 24222014.3
(22) Anmeldetag: 20.12.2024
(51) Int. Cl.: E05B 15/02, E05B 47/02, F16P 3/08, F16P 3/14

(54) **SICHERHEITSEINRICHTUNG**

(71) Anmelder: EUCHNER GmbH + Co. KG, 70771 Leinfelden-Echterdingen (DE)
(72) Erfinder: Gehrke, Mike, 71111 Waldenbuch (DE)
(74) Vertreter: Ruckh, Rainer Gerhard

(57) **Zusammenfassung**

Die Erfindung betrifft eine Sicherheitseinrichtung (1) mit einem Sicherheitsschalter (2) und einer beweglichen trennenden Schutzeinrichtung, an welcher ein Betätiger (3) und/oder einer Zahnleiste (25) angeordnet ist bzw. sind. Der Sicherheitsschalter (2) weist eine Antriebsvorrichtung auf, mittels derer die trennende Schutzeinrichtung in eine oder mehrere Schließstellungen einfahrbar oder aus dieser ausfahrbar ist oder wenigstens in einer Schließstellung positionierbar ist.

## Beschreibung

Die Erfindung betrifft eine Sicherheitseinrichtung.

Derartige Sicherheitseinrichtungen werden im Bereich der Sicherheitstechnik eingesetzt und weisen einen Sicherheitsschalter und einen dem Sicherheitsschalter zugeordneten Betätiger auf.

Für den Einsatz im Bereich der Sicherheitstechnik, insbesondere im Bereich des Personenschutzes, ist es erforderlich, dass die Sicherheitseinrichtung normative Anforderungen hinsichtlich deren Fehlersicherheit erfüllt, so dass gewährleistet ist, dass mit der Sicherheitseinrichtung eine entsprechend sichere Überwachungsfunktion durchgeführt werden kann. Eine derartige Sicherheitseinrichtung kann typischerweise zur Sicherung des Zugangs zu einem Gefahrenbereich eingesetzt werden. Beispielsweise kann mit einer Sicherheitseinrichtung eine Verriegelung einer trennenden Schutzeinrichtung, wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitseinrichtung die Schutztür verriegelt ist. Die Freigabe der Anlage kann über eine Sicherheitssteuerung erfolgen, welcher sicherheitsrelevante Schaltsignale der Sicherheitseinrichtung zugeführt sind.

Bei einer derartigen Sicherheitseinrichtung befindet sich der Betätiger an der trennenden Schutzeinrichtung, d.h. der Schutztür, während der Sicherheitsschalter stationär, beispielsweise an einen die trennende Schutzeinrichtung aufnehmenden Rahmen, befestigt ist. Wird die trennende Schutzeinrichtung, d.h. die Schutztür in ihre Schließstellung eingefahren, wird der Betätiger dadurch in eine Aufnahme des Sicherheitsschalters eingeführt.

Zur Verriegelung der Schutztür wird, wenn sich die Schutztür in ihrer Schließstellung befindet, der Betätiger in Form eines Riegels in der Aufnahme des Sicherheitsschalters gesichert. Diese Verriegelung wird dadurch kontrolliert, dass mit einer RFID-Leseeinheit im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Der Erfindung liegt die Aufgabe zugrunde, eine Sicherheitsschalteranordnung mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitseinrichtung mit einem Sicherheitsschalter und einer beweglichen trennenden Schutzeinrichtung, an welcher ein Betätiger und/oder einer Zahnleiste angeordnet ist bzw. sind. Der Sicherheitsschalter weist eine Antriebsvorrichtung auf, mittels derer die trennende Schutzeinrichtung in eine oder mehrere Schließstellung einfahrbar oder aus dieser ausfahrbar ist oder wenigstens in einer Schließstellung positionierbar ist.

Die erfindungsgemäße Sicherheitseinrichtung dient zur Absicherung eines Zugangs zu einem Gefahrenbereich, wobei der Zugang mit einer trennenden Schutzeinrichtung verschlossen werden kann, wobei die trennende Schutzeinrichtung insbesondere eine Tür in Form einer Schutztür ist.

Die Sicherheitseinrichtung umfasst einen stationär angeordneten Sicherheitsschalter und gemäß einer Variante der Erfindung einen an der trennenden Schutzeinrichtung angebrachten, mit dieser beweglichen Betätiger. Insbesondere kann der Sicherheitsschalter am Rahmen einer Tür und der Betätiger an der Tür angeordnet sein. Alternativ oder zusätzlich ist an der trennenden Schutzeinrichtung eine Zahnleiste angeordnet.

Der Sicherheitsschalter generiert ein Ausgangssignal abhängig davon, ob die trennende Schutzeinrichtung geschlossen ist oder nicht. Insbesondere generiert der Sicherheitsschalter ein Freigabesignal für eine Anlage im Gefahrenbereich nur dann, wenn die trennende Schutzeinrichtung geschlossen und insbesondere zugehalten ist. Bei offener trennender Schutzeinrichtung besteht die Gefahr, dass Personen in den Gefahrenbereich eintreten, so dass dann der Sicherheitsschalter ein Ausgangssignal generiert, mit dem die Anlage in einen sicheren Zustand überführt insbesondere stillgesetzt ist.

Bei der erfindungsgemäßen Sicherheitseinrichtung ist deren Funktion dahingehend erweitert, dass der Sicherheitsschalter eine Antriebsvorrichtung aufweist, mittels derer die trennende Schutzeinrichtung motorisch gesteuert bewegt werden kann. Dabei ist wesentlich, dass mit der Antriebsvorrichtung die trennende Schutzeinrichtung exakt in ihre Schließstellung eingefahren wird, wodurch ein kontrolliertes, sicheres und vollständiges Schließen des Zugangs zum Gefahrenbereich mit der trennenden Schutzeinrichtung gewährleistet ist.

Besonders vorteilhaft weist der Sicherheitsschalter ein Gehäuse auf. Die Antriebsvorrichtung weist ein über das Gehäuse hervorstehendes, um eine Drehachse drehbares, mittels eines elektrischen Antriebs angetriebenes Antriebselement auf, welches in Eingriff mit dem Betätiger bringbar ist.

Der Betätiger bildet somit ein Führungsmittel für das Antriebselement. Dabei ist das Antriebselement in eine Verriegelungsposition im oder am Betätiger eingefahren, wenn sich die trennende Schutzeinrichtung in ihrer Schließstellung befindet.

Durch die geometrische Ausbildung des Betätigers ist die Verriegelungsposition exakt festgelegt, d.h. es ist ein genaues, reproduzierbares Einfahren der trennenden Schutzeinrichtung in ihre Schließstellung gewährleistet.

Durch den Eingriff des Antriebselements mit dem Betätiger wird durch die Drehbewegung des Antriebselements der Betätiger und mit diesem die trennende Schutzeinrichtung relativ zum Sicherheitsschalter bewegt. Mit dem Antriebselement kann die trennende Schutzeinrichtung auch gegen erhöhte mechanische Widerstände in die Schließstellung eingefahren oder aus dieser herausgefahren werden.

Besonders vorteilhaft weist das Antriebselement ein Zahnrad auf, welches in Eingriff mit Rastelementen des Betätigers bringbar ist.

Bei Drehen des Antriebselements wird das Zahnrad mit seinen Zähnen entlang der Rastelemente des Betätigers bewegt, wodurch der Betätiger mit der trennenden Schutzeinrichtung relativ zum Sicherheitsschalter bewegt wird.

Gemäß einer konstruktiv vorteilhaften Ausgestaltung weist der Betätiger ein U-förmiges Betätigersegment auf, in welches das Antriebselement des Sicherheitsschalters eingefahren ist, wenn die trennende Schutzeinrichtung in ihre Schließstellung eingefahren ist.

Dabei ist an der Innenseite eines Schenkels des Betätigersegments eine Linearanordnung von Rastelementen vorhanden.

Das Antriebselement ist spielarm zwischen den Schenkeln des Betätigersegments geführt, so dass durch den Eingriff des Zahnrads das Antriebselement mit den Rastelementen die Relativbewegung zwischen Betätiger und Sicherheitsschalter bewirkt.

Die Länge der Schenkel und die Länge der an einem Schenkel vorhandenen Linearanordnung von Rastelementen geben die Länge des Verfahrwegs vor, über welchen die Antriebsvorrichtung eine Relativbewegung zwischen Betätiger und Sicherheitsschalter erzeugen kann.

Sobald das Antriebselement aus dem Bereich des Betätigers ausgefahren ist, kann manuell oder mittels weiterer Aktoren eine Öffnungs- oder Schließbewegung der trennenden Schutzeinrichtung durchgeführt werden.

Gemäß einer Variante der Erfindung weist die Sicherheitseinrichtung eine an den Betätiger anschließende, an der trennenden Schutzeinrichtung angeordneten Zahnleiste auf, die in Eingriff mit dem Antriebselement bringbar ist.

Dabei schließt die Zahnleiste an die Rastelemente des Betätigers direkt an.

Damit kann das Antriebselement nicht nur entlang der Rastelemente des Betätigers, sondern auch entlang der Zahnleiste bewegt werden, um so eine Relativbewegung zwischen Betätiger und damit der trennenden Schutzeinrichtung einerseits und dem Sicherheitsschalter andererseits zu erzeugen.

Die Antriebsvorrichtung des Sicherheitsschalters kann somit die trennende Schutzeinrichtung entlang eines größeren Verfahrwegs bewegen.

Besonders vorteilhaft ist die Länge der Zahnleiste an die Länge des Verfahrwegs der trennenden Schutzeinrichtung angepasst.

Damit kann die trennende Schutzeinrichtung entlang ihres gesamten Verfahrwegs mit der Antriebsvorrichtung des Sicherheitsschalters bewegt werden. Eine manuelle Durchführung von Öffnungs- und Schließbewegungen der trennenden Schutzeinrichtung oder ein Vorsehen zusätzlicher Aktoren zur Durchführung von Öffnungs- und Schließbewegungen der trennenden Schutzeinrichtung kann somit entfallen.

Die Zahnleiste kann prinzipiell einstückig ausgebildet sein. Gemäß einer vorteilhaften Variante weist die Zahnleiste einen modularen Aufbau derart auf, dass diese aus mehreren miteinander verbindbaren Zahnleistenelemente besteht.

Je nach Ausbildung der trennenden Schutzeinrichtung kann die Zahnleiste entlang einer Geraden oder einer gekrümmten Bahn verlaufen.

Gemäß einer weiteren Variante der Erfindung weist die Sicherheitseinrichtung nur eine Zahnleiste auf, jedoch keinen Betätiger. Dann ist die oder eine Verriegelungsposition durch eine bestimmte Position des Antriebselements an der Zahnleiste gegeben.

Gemäß einer vorteilhaften Ausführungsform der Erfindung weist der Sicherheitsschalter eine Zuhaltevorrichtung auf, mittels derer das Antriebselement in der Verriegelungsposition zugehalten werden kann.

Der Sicherheitsschalter generiert nur dann als Ausgangssignal ein Freigabesignal für den Betrieb der überwachten Anlage, wenn die trennende Schutzeinrichtung in ihre Schließstellung eingefahren und deren Zuhaltung bewirkt ist.

Die Zuhaltevorrichtung ist an die Konstruktion der Antriebsvorrichtung mit dem Antriebselement angepasst. Hierzu weist die Zuhaltevorrichtung eine mittels eines Elektromagneten betätigbare Sperrvorrichtung auf, wobei bei betätigter Sperrvorrichtung die Drehbewegung des Antriebselements blockiert ist. Bei gelöster Sperrvorrichtung kann das Antriebselement mittels des elektrischen Antriebs gedreht werden. Ebenfalls lässt sich bei gelöster Sperrvorrichtung das Antriebselement manuell drehen. Somit ist auch ein sogenanntes Hilfs- oder Fluchtentriegeln der Schutztür möglich.

Dabei weist die Sperrvorrichtung vorteilhaft eine Rastscheibe und eine koaxial zu dieser angeordnete Sperrscheibe auf, die nur bei betätigter Sperrvorrichtung miteinander in Rasteingriff sind.

Gemäß einer vorteilhaften Ausführungsform wird die Verriegelungsposition des Antriebselements mittels eines RFID-Systems kontrolliert, wobei das RFID-System eine im Sicherheitsschalter integrierte RFID-Leseeinheit umfassend eine im Antriebselement integrierte Lesespule und einen im Betätiger integrierten Transponder umfasst.

Durch die Kontrolle der Verriegelungsposition des Antriebselements wird auch die Schließstellung der trennenden Schutzeinrichtung kontrolliert. Dies ist ein wesentlicher sicherheitstechnischer Aspekt der erfindungsgemäßen Sicherheitseinrichtung, da der Sicherheitsschalter ein Freigabesignal für den Betrieb der überwachten Anlage nur dann generiert, wenn sich die trennende Schutzeinrichtung in ihrer Schließstellung befindet, was mit dem RFID-System kontrolliert wird.

Gemäß einer alternativen Weiterbildung der Erfindung weist die Sicherheitseinrichtung zusätzliche Sensorik auf, um einen teilweise in das Antriebselement eingeführten Betätiger zu erkennen, um diesen und damit auch die trennende Schutzeinrichtung in eine definierte Endstellung zu bringen. Alternativ kann auch der Motorstrom zur Positionsbewegung hinzugezogen werden.

Die Erfindung wird im Folgenden anhand der Zeichnungen erläutert. Es zeigen:
- Figur 1:: Ausführungsbeispiel der erfindungsgemäßen Sicherheitseinrichtung mit einem ein Antriebselement aufweisenden Sicherheitsschalter und einem Betätiger.
- Figur 2:: Anordnung gemäß Figur 1 mit in den Betätiger eingefahrenem Antriebselement.
- Figur 3:: Schnittdarstellung eines Ausschnitts der Anordnung gemäß Figur 2.
- Figur 4:: Schnittdarstellung des Sicherheitsschalters der Sicherheitseinrichtung gemäß den Figuren 1 und 2.
- Figur 5:: Perspektivische Darstellung von Komponenten des Sicherheitsschalters gemäß Figur 4.
- Figur 6:: Teilschnittdarstellung der Anordnung gemäß Figur 5.
- Figur 7:: Applikationsbeispiel für die Sicherheitseinrichtung gemäß den Figuren 1 und 2
a) bei einer geöffneten trennenden Schutzeinrichtung.
b) bei einer geschlossenen trennenden Schutzeinrichtung.
- Figur 8:: Ausführungsbeispiel der erfindungsgemäßen Sicherheitseinrichtung mit einem Sicherheitsschalter, einem Betätiger und einer Zahnleiste.
- Figur 9:: Applikationsbeispiel für die Sicherheitseinrichtung gemäß Figur 8.
- Figur 10:: Applikationsbeispiel für eine Variante der Sicherheitseinrichtung gemäß Figur 8
a) bei einer geöffneten trennenden Schutzeinrichtung.
b) bei einer geschlossenen trennenden Schutzeinrichtung.
- Figur 11a:: Schnittdarstellung der Anordnung gemäß Figur 10a.
- Figur 11b:: Schnittdarstellung der Anordnung gemäß Figur 10b.

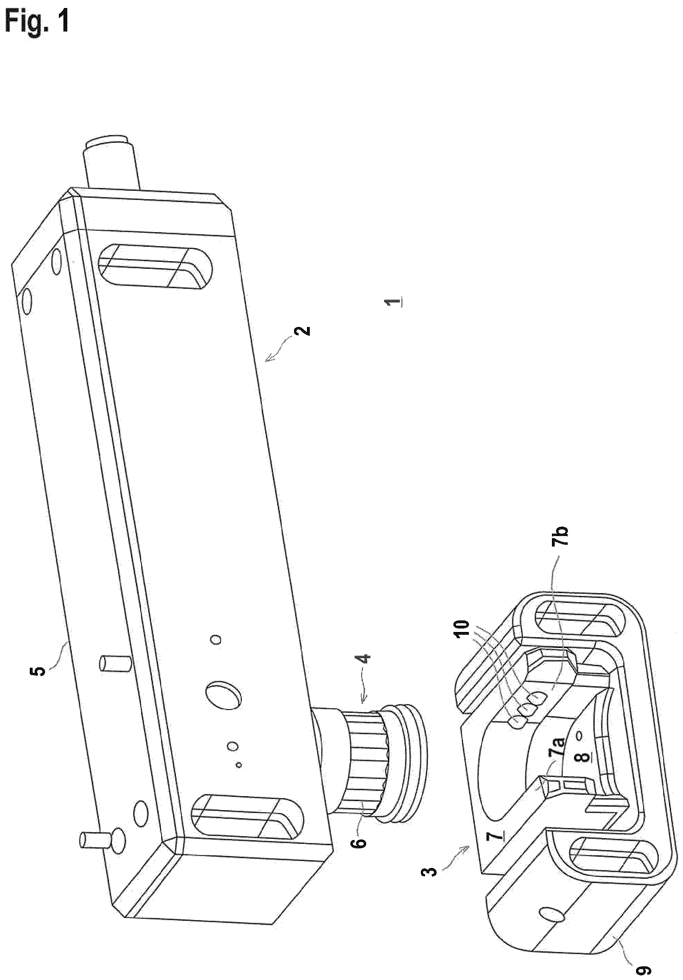

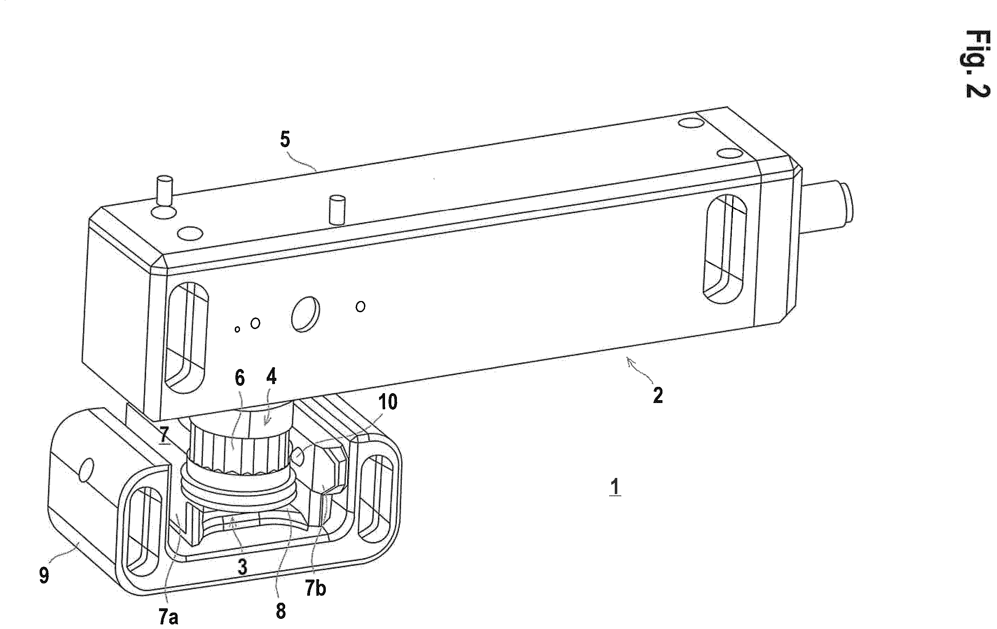

Die Figuren 1 und 2 zeigen ein Ausführungsbeispiel der erfindungsgemäßen Sicherheitseinrichtung 1. Die Sicherheitseinrichtung 1 umfasst einen Sicherheitsschalter 2 und einen zugeordneten Betätiger 3.

Der Sicherheitsschalter 2 ist stationär angeordnet, während der Betätiger 3 an einer trennenden Schutzeinrichtung angeordnet ist, die zwischen einer Öffnungs- und Schließstellung verfahrbar ist.

Erfindungsgemäß weist der Sicherheitsschalter 2 eine Antriebsvorrichtung auf. Die Antriebsvorrichtung weist ein um eine Drehachse drehbares Antriebselement 4 auf, das über ein Gehäuse 5 des Sicherheitsschalters 2 hervorsteht. Die Drehachse liegt in der Symmetrieachse des rotationssymmetrischen Antriebselements 4. Das Antriebselement 4 ist motorisch getrieben. Das im Wesentlichen kreiszylindrische Antriebselement 4 weist an seiner Mantelfläche ein Zahnrad 6 auf.

Der Betätiger 3 weist ein U-förmiges Betätigersegment 7 mit zwei Schenkeln 7a, 7b auf, an dessen Unterseite ein Bodenteil 8 des Betätigers 3 anschließt. Der Betätiger 3 ist in einer Betätigeraufnahme 9 gelagert, mit der der Betätiger 3 an der trennenden Schutzeinrichtung fixiert wird.

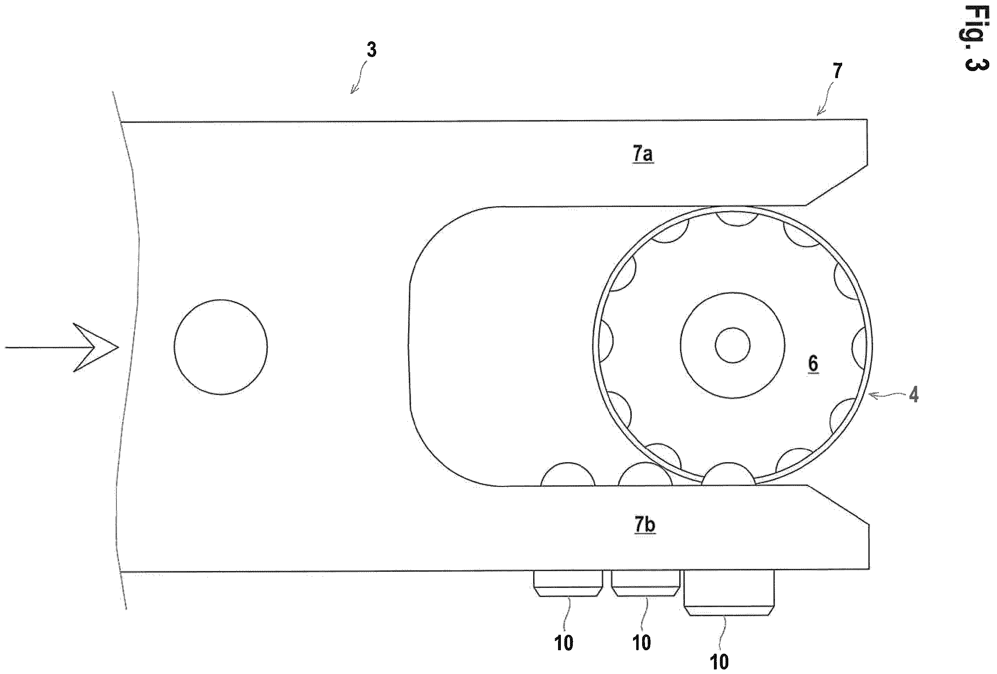

An der Innenseite eines der Schenkel 7b des U-förmigen Betätigersegments 7 befindet sich eine Linearanordnung von Rastelementen 10, wobei diese, wie Figur 3 zeigt, federnd gelagert sind. Anstelle dieser Rastelemente 10 kann auch eine Zahnreihe vorgesehen sein.

Sobald das Zahnrad 6 des Antriebselements 4 in Eingriff mit den Rastelementen 10 ist (Figuren 2 und 3), kann durch die motorisch getriebene Drehbewegung des Antriebselements 4 der Betätiger 3 mit der trennenden Schutzeinrichtung gegenüber dem Sicherheitsschalter 2 bewegt und so positioniert werden.

Wenn das Zahnrad 6 in Eingriff mit einem Rastelement 10 ist, wird dieses in den Schenkel 7b eingefedert (Figur 3). Das Zahnrad 6 ist dabei spielarm in der Aussparung des U-förmigen Betätigersegments 7 geführt.

Damit kann die trennende Schutzeinrichtung in eine Schließstellung eingefahren werden. In dieser Schließstellung liegt das Antriebselement 4 in einer Verriegelungsposition am hinteren Ende der Aussparung des U-förmigen Betätigersegments 7 (Figur 2). Ebenso kann durch eine entgegengesetzte Drehbewegung des Antriebselements 4 die trennende Schutzeinrichtung wieder aus der Schließstellung ausgefahren werden.

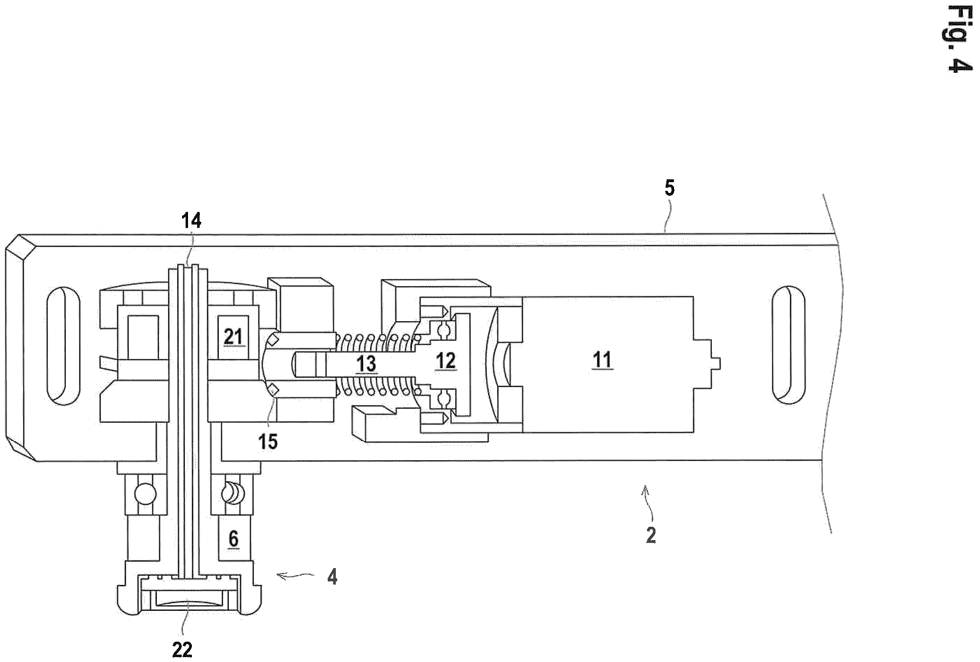

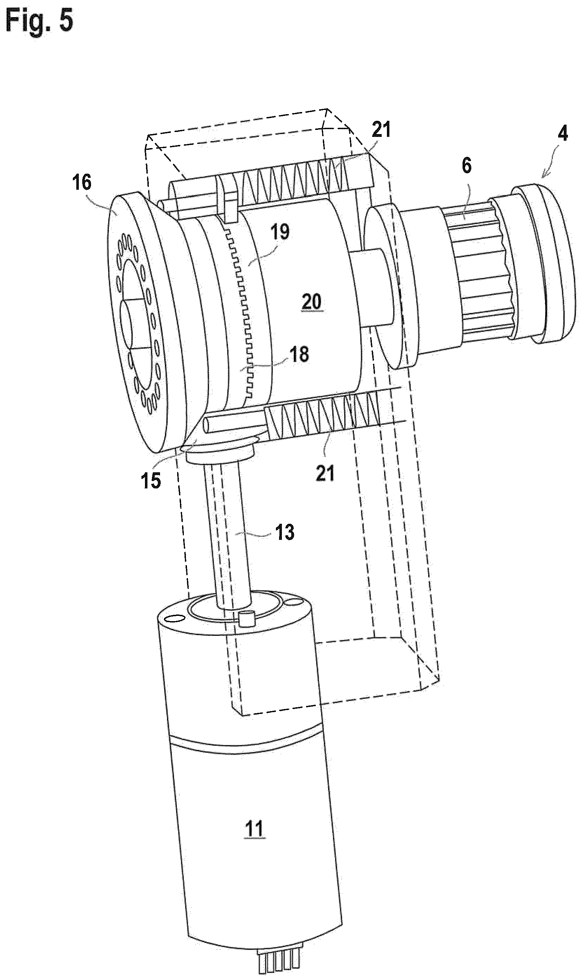

Figur 4 zeigt eine Schnittdarstellung des Sicherheitsschalters 2 der Sicherheitseinrichtung 1. Die Figuren 4 und 5 zeigen Komponenten des Sicherheitsschalters 2.

Als Bestandteil der Antriebsvorrichtung weist der Sicherheitsschalter 2 einen elektrischen Antrieb in Form eines Elektromotors 11 mit nachgeordnetem Getriebe 12 auf. Der Elektromotor 11 wird von einer nicht dargestellten Rechnereinheit gesteuert. Der elektrische Antrieb, insbesondere eine Welle 13 des Getriebes 12, ist in Längsrichtung des Sicherheitsschalters 2 (bei der Darstellung von Figur 4 in horizontaler Richtung) orientiert.

Die Drehachse des Antriebselements 4 verläuft senkrecht hierzu entlang einer drehstarren Kabeldurchführung 14.

Um die Drehbewegung der Welle 13 in eine senkrecht hierzu orientierte Drehbewegung des Antriebselements 4 umzusetzen, ist ein Winkelgetriebe 15 vorgesehen, das in Eingriff mit einer drehbaren Scheibe 16 ist.

Die Scheibe 16 ist über Kugeldruckstücke 17 an eine ebenfalls drehbare Rastscheibe 18 angekoppelt.

Die Kugeldruckstücke 17 bilden eine Überlastsicherung. Bei Auftreten großer Kräfte, beispielsweise bei einem manuellen plötzlichen Zuschlagen der trennenden Schutzeinrichtung, durch ein selbsthemmendes oder schwergängiges Getriebe 12, könnten auf das Antriebselement 4 große Kräfte auftreten, was zu Beschädigungen führen könnte. Um dies zu vermeiden, entkoppeln die Kugeldruckstücke 17 bei Auftreten großer Kräfte die Scheibe 16 von der Rastscheibe 18.

Die Scheibe 16, die Rastscheibe 18 und eine dieser gegenüberliegenden Sperrscheibe 19 sind koaxial zueinander angeordnet, und bilden eine rotationssymmetrische Anordnung. Die Sperrscheibe 19 und die Rastscheibe 18 weisen an ihren gegenüberliegenden Stirnseiten Raststrukturen, insbesondere Zahnungen, auf (Figur 5). Die Sperrscheibe 19 ist Bestandteil einer Zuhaltevorrichtung, mit der der Betätiger 3 in seiner Verriegelungsposition und damit die trennende Schutzeinrichtung in ihrer Schließstellung zugehalten werden kann.

Die Zuhaltevorrichtung wird komplettiert durch einen von der Rechnereinheit gesteuerten Elektromagneten 20 und diesem zugeordneten Federelementen 21.

Bei nicht betätigter Zuhaltung ist der Elektromagnet 20 nicht bestromt und die Sperrscheibe 19 und die Rastscheibe 18 liegen in Abstand zueinander, so dass deren Raststrukturen nicht ineinandergreifen.

Befindet sich das Antriebselement 4 in der Verriegelungsposition im Betätiger 3, wird die Zuhaltung durch Bestromung des Elektromagneten 20 betätigt. Der Elektromagnet 20 wird gegen die Federelemente 21 ausgelenkt und drückt die Sperrscheibe 19 gegen die Rastscheibe 18, so dass diese miteinander verrasten. Dadurch kann sich das Antriebselement 4 nicht mehr drehen und die Zuhaltung ist bewirkt. Dieses sogenannte Arbeitsstromprinzip kann auch in ein Ruhestromprinzip abgeändert werden. Dann bewirken Federelemente 21 die Zuhaltung und bei Bestromung des Elektromagneten 20 lässt sich die Zuhaltung deaktivieren.

Zur Detektion des Betätigers 3 in der Verriegelungsposition ist ein RFID-System vorgesehen. Das RFID-System umfasst eine im Sicherheitsschalter 2 integrierte, an die Rechnereinheit angeschlossene RFID-Leseeinheit mit einer Lesespule 22, die im Bereich der freiliegenden Stirnseite des Antriebselements 4 angeordnet ist (Figur 4).

Weiterhin umfasst das RFID-System einen Transponder im Bodenteil 8 des Betätigers 3 (nicht dargestellt).

Befindet sich der Betätiger 3 in der Verriegelungsposition, liegt dieser Transponder im Lesebereich der Lesespule 22 des Sicherheitssensors, so dass die RFID-Leseeinheit des Sicherheitsschalters 2 Daten aus dem Transponder auslesen kann, wodurch der Betätiger 3 in der Verriegelungsposition erkannt wird. Daraufhin wird die Zuhaltung bewirkt.

Vorteilhaft generiert der Sicherheitsschalter 2 nur dann ein Ausgangssignal in Form eines Freigabesignals, mit dem der Betrieb einer von der Sicherheitseinrichtung 1 überwachten Anlage freigegeben wird, wenn der Betätiger 3 in seiner Verriegelungsposition detektiert wird und die Zuhaltung bewirkt ist. Weitere Positionen des RFID-Systems sind denkbar, insbesondere auch außerhalb des Antriebselements 4.

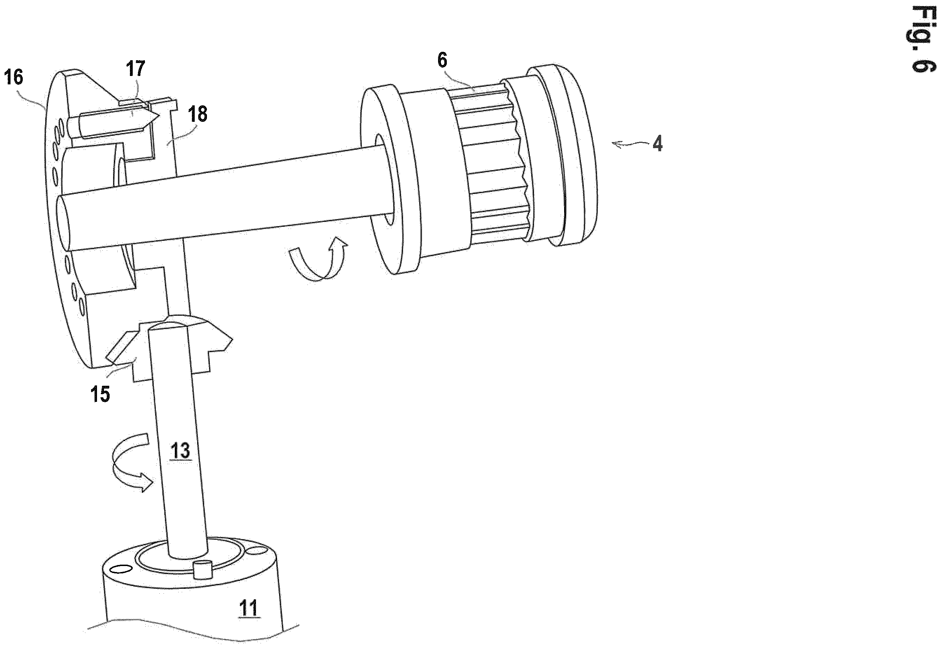

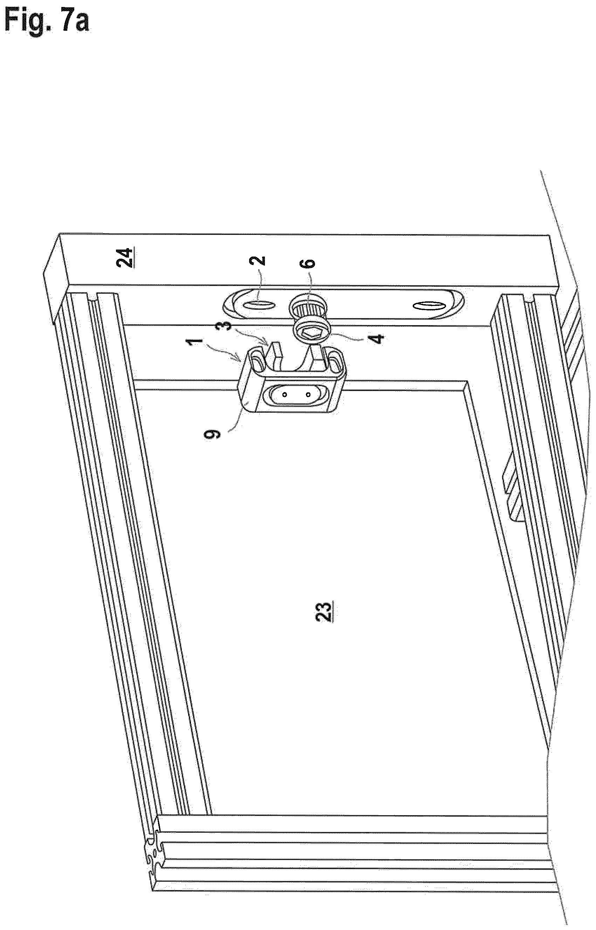

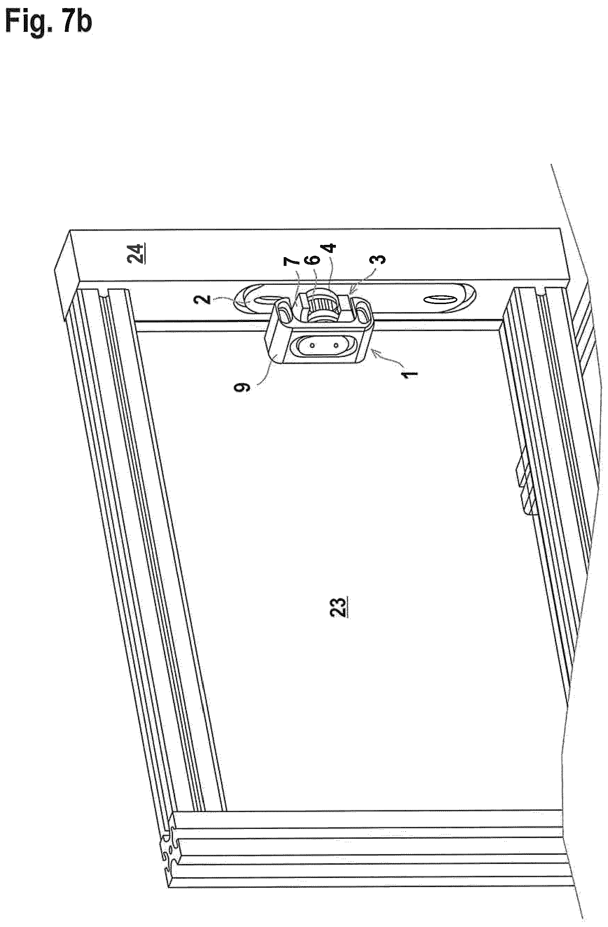

Die Figuren 7a, 7b zeigen ein Applikationsbeispiel für die Sicherheitseinrichtung 1 der Figuren 1 bis 6.

Der Betätiger 3 ist an einer trennenden Schutzeinrichtung in Form einer eine Schutztür bildenden Tür 23 befestigt. In einem Rahmen 24, der einen Zugang zu einem Gefahrenbereich begrenzt und der mit der Tür 23 verschlossen werden kann, ist der Sicherheitsschalter 2 der Sicherheitseinrichtung 1 so integriert, dass das Antriebselement 4 über den Rahmen 24 hervorsteht. Die Tür 23 ist um eine vertikale Achse schwenkbar.

Figur 7a zeigt die geöffnete Tür 23. Soll diese verschlossen werden, wird die Tür 23 zuerst manuell geschwenkt, bis das Antriebselement 4 in Eingriff mit den Rastelementen 10 des Betätigers 3 ist. Dann wird mit der Antriebsvorrichtung des Sicherheitsschalters 2 der Betätiger 3 in die Verriegelungsposition eingefahren (Figur 7b) und dort zugehalten.

Der Verfahrweg der Tür 23, der mit der Antriebsvorrichtung des Sicherheitsschalters 2 realisiert werden kann, ist durch die Länge der Linearanordnung der Rastelemente 10 des Betätigers 3 definiert und begrenzt.

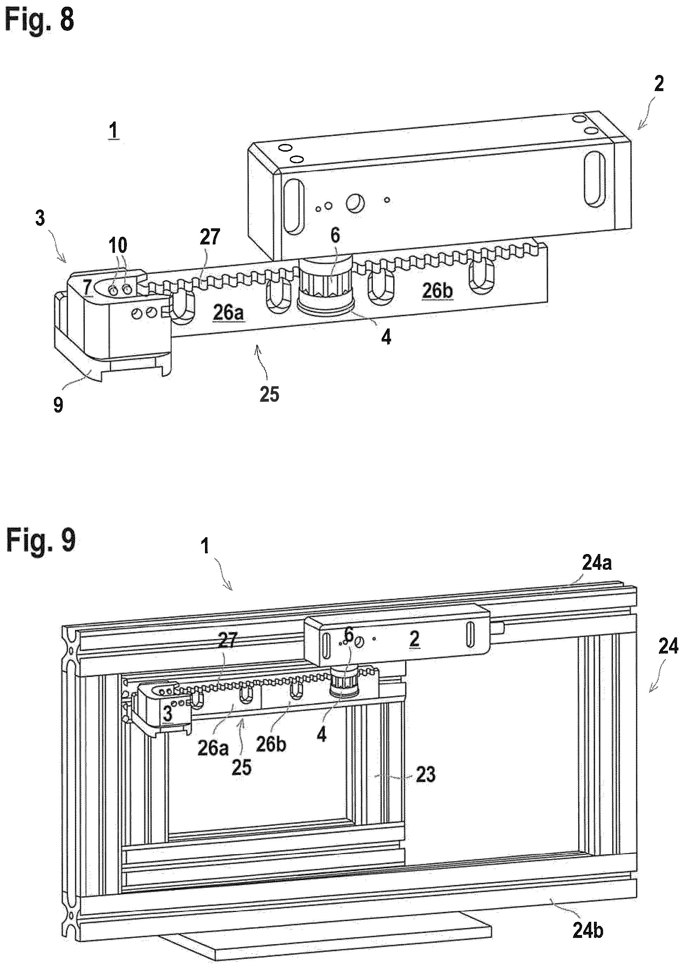

Figur 8 zeigt eine Erweiterung der Sicherheitseinrichtung 1, bei welcher der Verfahrweg durch eine Zahnleiste 25 vergrößert wird.

Die Sicherheitseinrichtung 1 der Figur 8 weist wieder einen Sicherheitschalter mit einer Antriebsvorrichtung und einen Betätiger 3 auf, die der Ausführungsform der Figuren 1 bis 6 entsprechen.

Zusätzlich weist die Sicherheitseinrichtung 1 eine längs einer Geraden verlaufende Zahnleiste 25 auf, die aus zwei Zahnleistenelementen 26a, 26b zusammengesetzt wird.

Die Zahnleiste 25 weist eine Linearanordnung von Zähnen 27 auf, die direkt an die Linearanordnung der Rastelemente 10 des Betätigers 3 anschließt, wobei die Rastelemente 10 und die Zähne 27 auf einer gemeinsamen Geraden liegen.

Das Antriebselement 4 des Sicherheitsschalters 2 kann nun nicht nur in Eingriff mit den Rastelementen 10 des Betätigers 3, sondern auch mit der Zahnleiste 25 gebracht werden, wodurch der Verfahrweg, der mit der Antriebsvorrichtung zurückgelegt werden kann, signifikant vergrößert ist.

Dies ist insbesondere aus Figur 9 ersichtlich, dass ein Applikationsbeispiel für die Sicherheitseinrichtung 1 gemäß Figur 8 zeigt.

Der Betätiger 3 ist wieder an einer Tür 23 befestigt, die im vorliegenden Fall als Schiebetür ausgebildet ist. Der Sicherheitsschalter 2 befindet sich an einem Rahmenoberteil 24a eines einen Zugang begrenzenden Rahmen 24.

Durch die Zahnleiste 25 kann mit der Antriebsvorrichtung des Sicherheitsschalters 2 die Tür 23 entlang eines vergrößerten Verfahrwegs verfahren werden, um Öffnungs- und Schließvorgänge durchzuführen. Wird die Tür 23 geschlossen, wird das Antriebselement 4 zunächst entlang der Zahnleiste 25 bewegt, wobei das Zahnrad 6 des Antriebselements 4 in Eingriff mit den Zähnen 27 der Zahnleiste 25 ist. Anschließend erfolgt ein Übergang des Antriebselements 4 zu den Rastelementen 10 des Betätigers 3, um diesen kontrolliert in die Verriegelungsposition einzufahren, wo die Zuhaltung mittels der Zuhaltevorrichtung des Sicherheitsschalters 2 erfolgt. Das Öffnen der Tür 23 erfolgt in umgekehrter Reihenfolge. Das Zuhalten des Antriebselements 4 lässt sich auch in verschiedenen Positionen der Zahnleiste 25 aktivieren und gleichzeitig lassen sich diese Positionen detektieren. In diesem Fall ist der Betätiger 3 nicht notwendig. Die Zuhaltung ist dann allerdings nur in Verfahrrichtung der Schutztür gegeben. Die Freiheitsgerade senkrecht zur Verfahrrichtung werden durch die Schutztür selbst begrenzt.

Bei der Ausführungsform der Figur 9 ist der den Zugang zu einem Gefahrenbereich begrenzende Rahmen 24 rechteckförmig ausgebildet und in einer vertikalen Ebene orientiert. Dementsprechend bildet auch die Tür 23 ein ebenes, rechteckförmig ausgebildetes Flächenelement. Dazu angepasst verläuft die Zahnleiste 25 entlang einer Geraden.

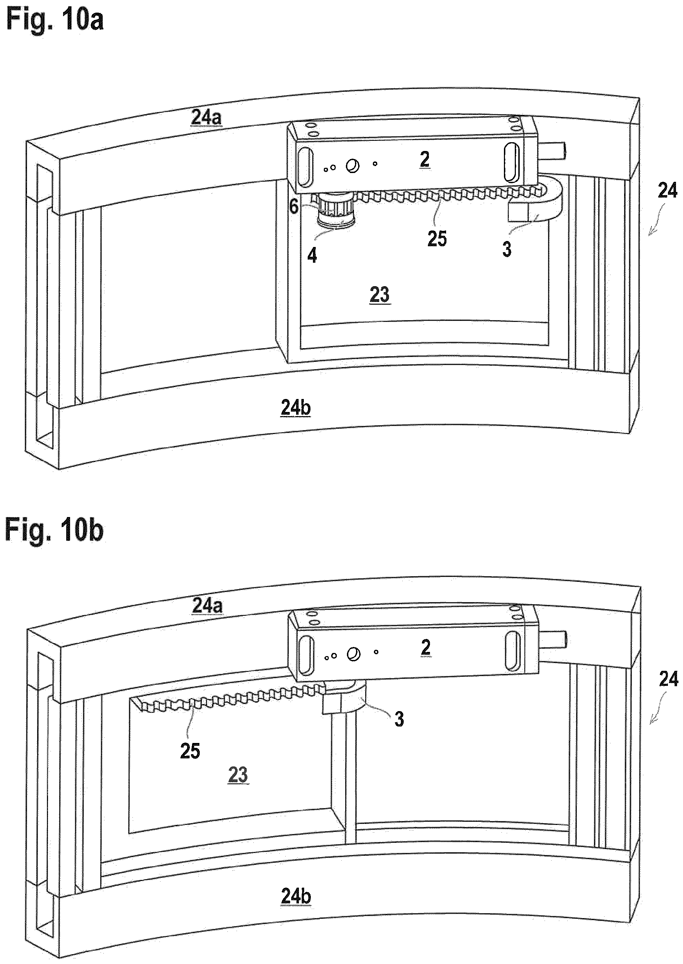

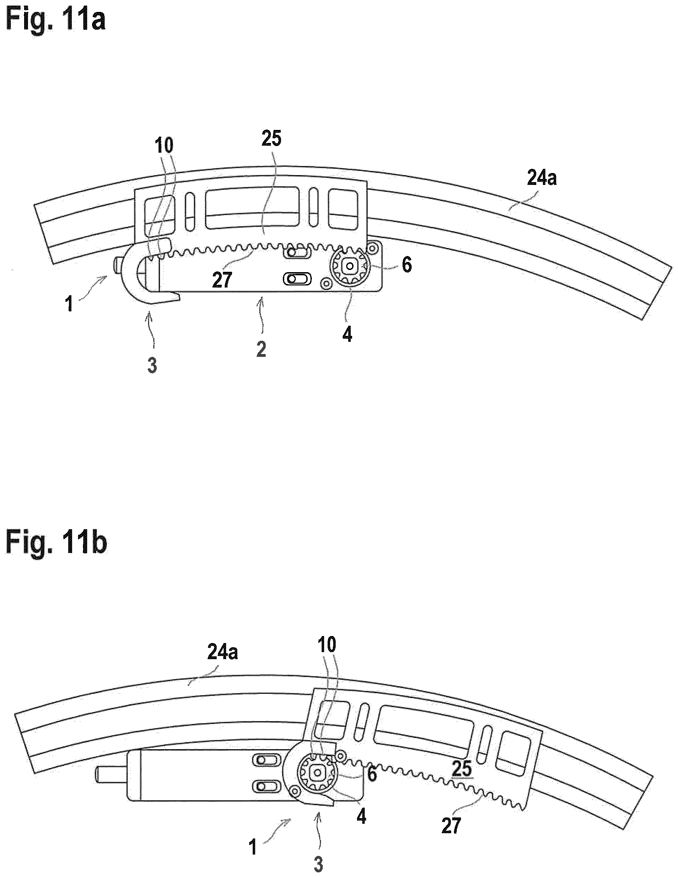

Die Figuren 10a, 10b und 11a, 11b zeigen ein hierzu modifiziertes Ausführungsbeispiel. Dort verlaufen ein Rahmenoberteil 24a und ein Rahmenunterteil 24b des Rahmens 24 entlang einer gekrümmten Bahn. Das Rahmenoberteil 24a und Rahmenunterteil 24b sind über in vertikaler Richtung verlaufenden Rahmenteile verbunden.

Daran angepasst ist auch die Tür 23 als gekrümmtes Flächenelement ausgebildet.

Daran angepasst verläuft auch die an den Betätiger 3 anschließende Zahnleiste 25 auch entlang einer gekrümmten Bahn, wobei deren Krümmung an die Krümmungen des Rahmenoberteils 24a und Rahmenunterteils 24b angepasst ist, wie aus den Figuren 11a, 11b ersichtlich.

### Bezugszeichenliste

- (1): Sicherheitseinrichtung
- (2): Sicherheitsschalter
- (3): Betätiger
- (4): Antriebselement
- (5): Gehäuse
- (6): Zahnrad
- (7): Betätigersegment
- (7a): Schenkel
- (7b): Schenkel
- (8): Bodenteil
- (9): Betätigeraufnahme
- (10): Rastelement
- (11): Elektromotor
- (12): Getriebe
- (13): Welle
- (14): Kabeldurchführung
- (15): Winkelgetriebe
- (16): Scheibe
- (17): Kugeldruckstück
- (18): Rastscheibe
- (19): Sperrscheibe
- (20): Elektromagnet
- (21): Federelement
- (22): Lesespule
- (23): Tür
- (24): Rahmen
- (24a): Rahmenoberteil
- (24b): Rahmenunterteil
- (25): Zahnleiste
- (26a): Zahnleistenelement
- (26b): Zahnleistenelement
- (27): Zahn

## Patentansprüche

1. Sicherheitseinrichtung (1) mit einem Sicherheitsschalter (2) und einer beweglichen trennenden Schutzeinrichtung, an welcher ein Betätiger (3) und/oder einer Zahnleiste (25) angeordnet ist bzw. sind, **dadurch gekennzeichnet, dass** der Sicherheitsschalter (2) eine Antriebsvorrichtung aufweist, mittels derer die trennende Schutzeinrichtung in eine oder mehrere Schließstellungen einfahrbar oder aus dieser ausfahrbar ist oder in wenigstens einer Schließstellung positionierbar ist.

2. Sicherheitseinrichtung (1) nach Anspruch 1, **dadurch gekennzeichnet, dass** der Sicherheitssschalter ein Gehäuse (5) aufweist, und dass die Antriebsvorrichtung ein über das Gehäuse (5) hervorstehendes um eine Drehachse drehbares, mittels eines elektrischen Antriebs angetriebenes Antriebselement (4) aufweist, welches in Eingriff mit dem Betätiger (3) bringbar ist.

3. Sicherheitseinrichtung (1) nach Anspruch 2, **dadurch gekennzeichnet, dass** das Antriebselement (4) in eine Verriegelungsposition im oder am Betätiger (3) oder an der Zahnleiste (25) eingefahren ist, wenn sich die trennende Schutzeinrichtung in ihrer Schließstellung befindet.

4. Sicherheitseinrichtung (1) nach einem der Ansprüche 2 oder 3, **dadurch gekennzeichnet, dass** das Antriebselement (4) ein Zahnrad (6) aufweist, welches in Eingriff mit Rastelementen (10) des Betätigers (3) oder mit der Zahnleiste (25) bringbar ist.

5. Sicherheitseinrichtung (1) nach einem der Ansprüche 2 bis 4, **dadurch gekennzeichnet, dass** der Betätiger (3) ein U-förmiges Betätigersegment (7) aufweist, in welches das Antriebselement (4) des Sicherheitsschalters (2) eingefahren ist, wenn die trennende Schutzeinrichtung in ihre Schließstellung eingefahren ist.

6. Sicherheitseinrichtung (1) nach einem der Ansprüche 4 und 5, **dadurch gekennzeichnet, dass** an der Innenseite eines Schenkels (7a, 7b) des Betätigersegments (7) eine Linearanordnung von Rastelementen (10) vorhanden ist.

7. Sicherheitseinrichtung (1) nach einem der Ansprüche 1 bis 6, **dadurch gekennzeichnet, dass** die Zahnleiste (25) an die Rastelemente (10) des Betätigers (3) direkt anschließt.

8. Sicherheitseinrichtung (1) nach Anspruch 7, **dadurch gekennzeichnet, dass** die trennende Schutzeinrichtung entlang eines Verfahrwegs bewegbar ist, und dass die Länge der Zahnleiste (25) an die Länge des Verfahrwegs angepasst ist.

9. Sicherheitseinrichtung (1) nach einem der Ansprüche 1 bis 8, **dadurch gekennzeichnet, dass** die Zahnleiste (25) einstückig ausgebildet ist oder aus einer Anordnung von miteinander verbundenen Zahnleistenelementen (26a, 26b) besteht und/oder dass die Zahnleiste (25) entlang einer Geraden oder einer gekrümmten Bahn verläuft.

10. Sicherheitseinrichtung (1) nach einem der Ansprüche 3 bis 9, **dadurch gekennzeichnet, dass** der Sicherheitsschalter (2) eine Zuhaltevorrichtung aufweist, mittels derer das Antriebselement (4) in der Verriegelungsposition zugehalten werden kann.

11. Sicherheitseinrichtung (1) nach Anspruch 10, **dadurch gekennzeichnet, dass** die Zuhaltevorrichtung nach einem Arbeitsstromprinzip oder einem Ruhestromprinzip arbeitet.

12. Sicherheitseinrichtung (1) nach einem der Ansprüche 10 oder 11, **dadurch gekennzeichnet, dass** bei gelöster Zuhaltevorrichtung das Antriebselement (4) manuell drehbar ist, wodurch eine Hilfs- oder Fluchtentriegelung für die trennende Schutzeinrichtung realisiert ist.

13. Sicherheitseinrichtung (1) nach einem der Ansprüche 10 bis 12, **dadurch gekennzeichnet, dass** die Zuhaltevorrichtung eine mittels eines Elektromagneten (20) oder mittels eines Aktors betätigbare Sperrvorrichtung aufweist, wobei bei betätigter Sperrvorrichtung die Drehbewegung des Antriebselements (4) blockiert ist, und dass bei gelöster Sperrvorrichtung das Antriebselement (4) mittels des elektrischen Antriebs oder auch manuell gedreht werden kann.

14. Sicherheitseinrichtung (1) nach Anspruch 13, **dadurch gekennzeichnet, dass** die Sperrvorrichtung eine Rastscheibe (18) und eine koaxial zu dieser angeordnete Sperrscheibe (19) aufweist, die nur bei betätigter Sperrvorrichtung miteinander in Rasteingriff sind.

15. Sicherheitseinrichtung (1) nach einem der Ansprüche 3 bis 14, **dadurch gekennzeichnet, dass** die Verriegelungsposition des Antriebselements (4) mittels eines RFID-Systems kontrolliert wird, wobei das RFID-System eine im Sicherheitsschalter (2) integrierte RFID-Leseeinheit umfassend eine im Antriebselement (4) integrierte Lesespule (22) und einen im Betätiger (3) integrierten Transponder umfasst.
